# EUROPEAN PATENT SPECIFICATION

(11) **EP 3 679 285 B1**
(45) Date of publication and mention of the grant of the patent: **12.10.2022**
(21) Application number: 18772888.6
(22) Date of filing: 24.08.2018
(51) Int. Cl.: F16L 37/02, F16L 37/04, F16L 37/098, F24C 3/12

(54) **GAS COOKING APPLIANCE**
GASKOCHGERÄT
APPAREIL DE CUISSON À GAZ

(30) Priority: 04.09.2017 ES 201731064
(43) Date of publication of application: 15.07.2020
(73) Proprietor: BSH Hausgeräte GmbH, 81739 München (DE)
(72) Inventor: ACOSTA HERRERO, Luis, 39600 Maliaño (Cantabria) (ES); HOFFBECK, Guillaume, 67530 Ottrott (FR); LOPEZ ORTIZ, Alberto, 39004 Santander (ES); PALACIOS VALDUEZA, Luis Antonio, 39610 Astillero (ES); PLACER MARURI, Emilio, 39120 Liencres (ES); SAIZ GONZALEZ, Roberto, 39539 Villapresente Cantabria (ES); SITTLER, Thierry, 67640 Lipsheim (FR)
(86) International application number: PCT/IB2018/056422
(87) International publication number: WO 2019/043534

(56) References cited:
- WO-A1-2006/018449
- DE-A1- 3 921 549
- DE-U1- 8 522 062
- DE-U1- 29 920 738
- GB-A- 2 022 727
- US-A- 4 621 842
- US-A1- 2003 001 383
- US-A1- 2004 070 198

## Description

The present invention relates to a connecting arrangement between a gas pipe and a gas device of a gas appliance, to a gas appliance with a connecting arrangement and to an assembly process of a connecting arrangement.

Patent application WO2016/075579A1 describes a gas stove with a gas burner, a gas valve and a gas pipe connecting the gas burner to the gas valve. The gas pipe is attached to a gas connection of the gas valve by means of a connecting device.

DE 299 20 738 U1 describes a transition component for use between a pipe system with small flanges and a pipe system with push-in fittings.

GB 2 022 727 A describes a fuel injection nozzle and an elastomeric sleeve adapted to fasten the nozzle in a bore leading to an inlet duct of a cylinder head or to an air suction conduit of an internal combustion engine.

DE 39 21 549 A1 describes assembly and dismantling of submersible motor-driven pumps in sewage water or excrement containers.

WO 2006/018449 A1 describes a gas hob, comprising at least one gas supply component with a hollow cylindrical gas line connector, into which a gas line is plugged at the terminus thereof, with a clamp sleeve arranged between the same and the inner wall of the gas line connector, which holds the gas line in the gas line connector. The inner wall is formed with an undercut with which the clamp sleeve is engaged. An annular seal is arranged in the undercut for sealing between the gas line and the undercut.

DE 85 22 062 U1 describes a plug coupling for connecting a delivery line to a component having a flow channel for the medium to be delivered.

US 4 621 842 A describes a releasable push-to-connect tube fitting wherein a collet receiving the tube end is provided with longitudinally extending inner slots permitting constriction of the inner end of the collet about the tube end in the made-up condition of the fitting.

US 2004/070198 A1 describes a union for which may be secured by press fitting in a housing recess.

US 2003/001383 A1 describes a connection device for a fluid line having a connection unit with a sleeve-like insert body placed by plugging in a socket in the metallic holding body.

In view of this background, the object of the present invention is to provide a better, safer and more reliable gas cooking appliance.

Accordingly, the object is achieved by a gas cooking appliance with a gas device and a gas pipe that are connected to one another by means of a connecting arrangement of the gas pipe of the gas appliance to a gas connection of a gas device of the gas appliance comprising a connecting device to connect the gas pipe to the gas connection, wherein the gas connection has an opening with an opening inner surface having a diameter bigger than a diameter of a pipe outer surface of the gas pipe, which define an opening ring-shaped space between them, the connecting device has an insertion part inserted into the opening tubular space with a meshing section fixed at least axially to the opening inner surface and a gripping section in contact with the pipe outer surface of the gas pipe, thereby limiting the movement of the gas pipe at least axially. The connecting arrangement comprises a sealing device mounted in the opening tubular space between the pipe outer surface and the opening inner surface. The sealing device is made in one piece with the connecting device.

The connecting arrangement connects an end of the gas pipe to a gas cooking applicance. The end of the gas pipe is a pipe end having the form of a substantially rectilinear hollow cylinder, the outer surface of the pipe having a substantially circular section. The gas pipe is made of a preferably metallic material, although it could be of a plastic material.

The gas device can be a gas tap or a gas burner having the gas connection. The gas connection is the inlet through which gas can flow into the gas device. The gas connection has an opening in the manner of a substantially constant and rectilinear, cylindrical hollow of a substantially circular section. The connection of the end of the gas pipe to the gas connection is effected by an axial displacement of the pipe end when it is inserted into the opening of the gas connection.

The diameter of the opening of the gas connection is bigger than the diameter of the pipe outer surface of the gas pipe. Therefore, there is an opening tubular space between them, in which the connecting device is mounted. The connecting device has an insertion part inserted into the opening, i.e. fitted into the opening along an insertion depth. The connecting device can also have a stop part at an end remaining outside the gas connection to limit its displacement into the gas connection. The insertion part has a meshing part to fix the connecting device to the opening inner surface in such a manner that its movement is limited at least axially. The insertion part also has a gripping section contacting the pipe outer surface, thereby limiting the axial movement of the pipe, in particular in the opposite direction to the direction of insertion of the gas pipe.

By means of the utilization of the connecting arrangement, it is possible to dispense with a connecting nut to connect the gas pipe to the gas valve. Since the connecting device is mountable without any tool, it can be mounted in a very quick and easy manner, in particular with no tools. In this manner, the assembly process of the gas pipe at the gas valve can be simplified. Furthermore, since at least a part of the connecting device, in particular the insertion part, remains inside the opening tubular space, the connecting device is protected by the external body of the gas connection. In this manner, the connecting arrangement is more robust and safer.

The gas connection can have an opening inner stop beyond the opening in the direction of insertion of the gas pipe. Besides, the connecting arrangement comprises a sealing device mounted in the opening tubular space between the pipe outer surface and the opening inner surface. The sealing device is connected to the connecting device at the end of the insertion part inserted into the gas connection. So, during the assembly process of the connecting arrangement, the connecting device and the sealing device can be jointly assembled into the gas connection and subsequently the gas pipe can be inserted into the gas connection passing through both devices, i.e. the connecting and the sealing device, in just one step.

The cylindrical hollow defined by the opening has a constant section and extends into the gas connection from the outer limit of the gas connection up to an opening inner stop. The opening inner stop can be a ring-shaped opening inner stop concentric with the central axis of the opening, having a smaller diameter than the diameter of the opening inner surface. A sealing device, in particular a sealing O-ring gasket, is placed at the opening inner stop and hermetically closes the interior of the gas device and does not let gas escape towards the opening tubular space.

Preferably, the opening inner stop has a substantially ring-shaped form adjusted to the diameter of the gas pipe. More preferably, the opening inner stop extends into the gas device, thereby guiding and aligning the gas pipe.

The gripping section presses the pipe outer surface and limits the movement of the gas pipe at least in the axial direction of extraction of the gas pipe. The gripping section is elastic and forced to a tensed position when the gas pipe passes through it, pressing it when it tends to recover its resting position towards the center of the pipe. In this manner, the end of the gas pipe cannot be easily extracted from the mounting position in the gas connection of the gas device.

For a better attachment of the gas pipe, the pipe outer surface has at least a notch with which at least a flexible flange of the gripping section meshes, thereby limiting the movement of the gas pipe at least in its extraction axial direction. The gripping section has at least a flange, and preferably more than one flexible flange that bend when the gas pipe passes during the assembly and which snap into at least one notch on its surface. The notches can be perimetral grooves on the surface of the pipe. The flange is joined at an end to the meshing section and the other free end extends into the gas connection and the center of the connecting piece. The free end deflects during the insertion of the gas pipe and snaps into the notch on the surface of the gas pipe. In this manner, when an extraction force is exerted upon the gas pipe, the free end opposes the movement of the pipe.

If it is necessary to separate the pipe gas from the gas connection at any time, it is provided that the gripping section is actuable with a tool to loosen the gas pipe. That is, the flexible flanges can be actuated with a tool to loosen the pipe without the need to break the connecting device. In this manner, the connecting device can be removed from the gas device easily and with no damages occurring.

For a simple fixation of the connecting device, it is provided that the meshing section is press-fitted into the opening. The meshing section of the insertion part of the connecting device has a cylindrical meshing outer surface having a diameter slightly bigger than the inner diameter of the opening. In this manner, when the connecting device is mounted into the opening, you need to exert force, so that the connecting device cannot be detached once it is mounted. It is also possible that the meshing outer surface has meshing elements that grab connecting elements arranged on the opening inner surface. With this, a stronger fixation of the connecting device in axial direction can be achieved. This connecting type could fix the connecting device only axially and leave it freed from forces radially around the mounting central axis.

To achieve a low-cost connecting device, it is provided that the meshing section and the gripping section of the insertion part of the connecting device are made in one piece of plastic material. If the connecting device has a stop part, this stop part can also form only one piece of plastic with the rest of the connecting device. In a preferred manner, the connecting device is an injection-moulded plastic component. In this way, a high number of pieces of the connecting device can be manufactured in an economical manner. Alternatively, the connecting device can be made of a metal material. Or a part of the connecting device can be made of plastic, e.g. the stop part and the meshing section, while the gripping section can be made of a flexible metal sheet fixed in a positive-fitting manner to the meshing section.

The connecting device of the connecting arrangement comprises an insertion part having a meshing section and a sealing device. The sealing device can be arranged on an inner face of the insertion part and/or on an end of this. The meshing section is press-fitted onto the opening inner surface having a sealing function. The connecting device can comprise also a stop part to limit its insertion into the opening of the gas connection. In this embodiment, the connecting device is made in one piece of a gum, rubber or silicone material, or the like. The application of this type of connecting arrangements in gas appliances simplifies their assembly in gas cooking appliances. The gas cooking appliance can be a gas stove, a gas oven or a gas hob.

In an assembly process of a connecting arrangement, in a first step, the sealing device is inserted into the opening of the gas connection, the connecting device is subsequently inserted into the opening and, finally, the gas pipe is inserted through the gripping section of the connecting device.

The connecting device and/or the gas hob are now described in greater detail by means of preferred embodiments with reference to the attached figures.
- Fig. 1: shows a perspective exploded view of an embodiment of the connecting arrangement of a gas pipe to a gas device, not covered by the claims;

- Fig.2: shows the perspective view of the embodiment of the connecting arrangement according to figure 1 having its elements assembled;
- Fig. 3: shows a section view of the connecting arrangement of figures 1 and 2;
- Fig. 4: shows a perspective view of the connecting device for the connecting arrangement of figures 1 to 3;
- Fig. 5a: shows a perspective view of another connecting device for a gas cooking appliance according to the invention, and
- Fig. 5b: shows a section view of the connecting device of figure 5a.

In the figures, the same elements or having the same function are provided with the same reference numerals, unless indicated otherwise.

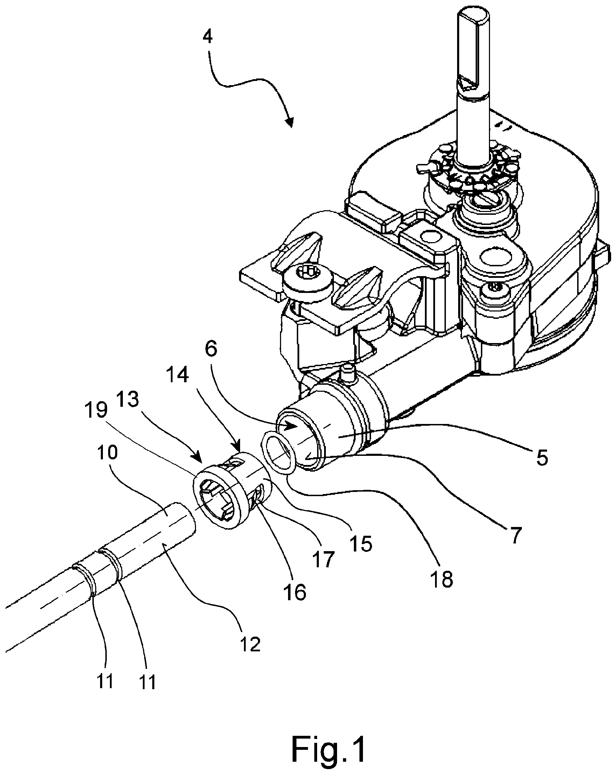

Figure 1 shows schematically a perspective exploded view of a connecting arrangement of a gas pipe 10 to a gas device 4. The gas device 4 of this figure is a gas valve 4 of a gas hob. The gas valve 4 has a housing and a drive shaft projecting beyond the housing. The housing has a gas connection 5 with an opening 6 having a cylindrical opening inner surface 7.

The end of the gas pipe 10 is connectable to the gas connection 5. In this figure, the end of the gas pipe 10 is shown facing the opening 6. The end of the gas pipe 10 is preferably rectilinear as well as the opening 6 of the gas connection 5. A curved configuration would be possible but less practical for the assembly. The gas pipe 10 has a pipe outer surface 12 having notches 11 in an area close to its end.

A sealing device 18 in the form of an O-ring of a material such as gum, rubber, silicone, or the like, is facing the opening 6 of the gas connection 5.

The connecting device 13 is arranged between the sealing device 18 and the gas pipe 10. In this embodiment, the connecting device 13 is made in one plastic piece and has an insertion part 14 and a stop part 19. The insertion part 14 has a meshing section 15 and a gripping section 16 with flanges 17.

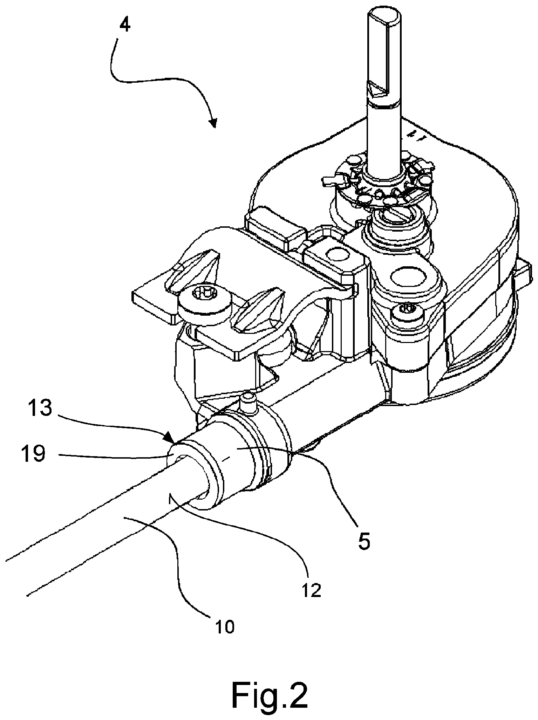

Figure 2 shows the connecting arrangement of figure 1 with all its elements assembled. In this manner, the connecting device 13 is inserted into the gas connection 5 of the gas device 4, of which connecting device 13 only its stop part 19 is shown, through which the gas pipe 10 is inserted with its pipe surface 12 guided into the gas connection 5.

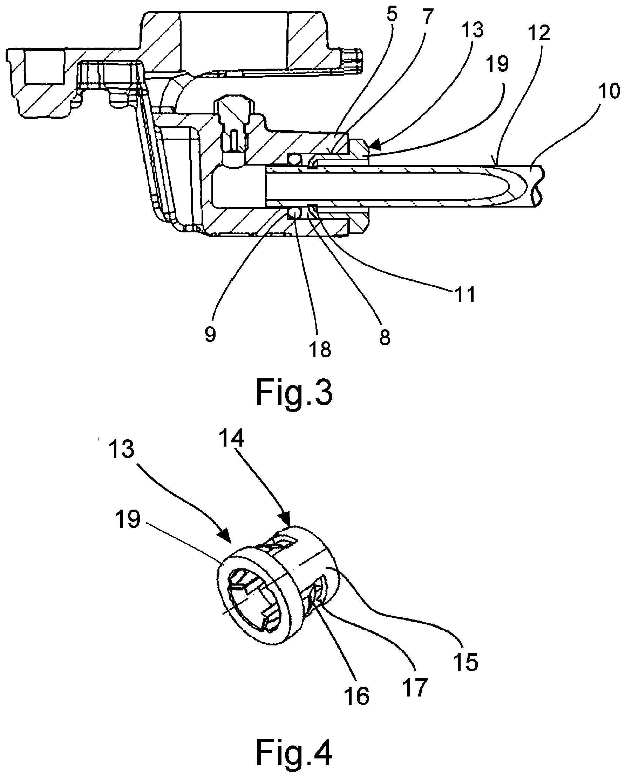

Figure 3 shows a section of the connecting arrangement described in the preceding figures, wherein in this case the gas device 4 is a gas burner with a gas connection 5. The gas device 4 with a gas connection 5 having an opening 6 is shown. The opening 6 has a cylindrical opening inner surface 7 with an opening inner stop 9 made as a diametrical narrowing of the opening 6. The end of the gas pipe 10 having a circular section is inserted into the gas connection 5 through the opening 6 up to a depth beyond the opening inner stop 9. There is an opening tubular space 8 between the pipe outer surface 12 and the opening inner surface 7, into which the connecting device 13 is fitted. The connecting device 13 has a stop part 19 and an insertion part 14 inserted into the opening tubular space 8. The insertion part 14 has a meshing section 15 press-fitted or fitted in a positive-fitting manner onto the opening inner surface 7. The insertion part 14 has a gripping section 16 with flanges 17 protruding from the inner wall of the insertion part 14 and which fit into a notch 11 of the perimeter of the gas pipe 10.

A sealing device 18 in the form of an O-ring gasket is arranged in the opening tubular space 8 at the opening inner stop 9. This sealing device 18 fills the space between the opening inner surface 7 and the pipe outer surface 12. In the demounted state, the sealing device 18 or O-ring gasket has an inner diameter smaller than the outer diameter of the gas pipe 10 and an outer diameter similar to the diameter of the opening 6, particularly in the area with the opening inner stop 9. During the assembly of the connecting arrangement, the gasket is inserted into the opening 6 and subsequently the pipe 10 is inserted through it. Therefore, the gasket expands radially and is pushed against the opening inner surface 7, being pressed and closing the opening tubular space 8 to the flow-through of liquids and in particular gases.

Figure 4 shows a connecting device 13 for the connecting arrangement of figures 1 and 2. The connecting device 13 has a stop part 19 and an insertion part 14. The outer surface of the insertion part 14 is a meshing section 15 to fit onto the opening inner surface 7. The insertion part 14 has three flanges 17 formed as elements comprised by the gripping section 16 to mesh with the notch 11 of the gas pipe 10. In this embodiment, the connecting device 13 is made in one plastic piece. In other possible embodiments not shown in the figures, the flanges 17 of the gripping section 16 can be made as a metal ring arranged inside the insertion part 14. In any case, the flanges 17 are elastic to let the pipe 10 extend through them and them grip it.

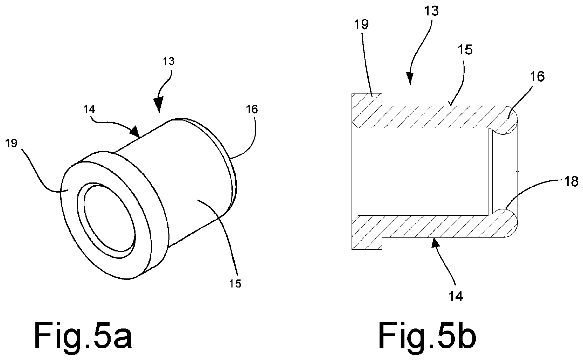

Figure 5a shows another embodiment of the connecting device 13 in a perspective view. In this case, the connecting device 13 is made in one elastic piece of a gum, rubber, or silicone material, or the like and has a stop part 19 and an insertion part 14. The insertion part 14 has a meshing section 15 made as an outer surface having a diameter slightly bigger than the opening inner surface 7 of the opening 6. In this manner, it can be press-fitted into the opening 6.

Figure 5b shows a cross-section through the central axis of the connecting device 13 of figure 5a. The stop part 19 and the insertion part 14 can be seen. The insertion part 14 has a meshing section 15 made as a surface having an outer diameter bigger than the inner diameter of the opening 6, fitting into the opening 6 in a positive-fitting manner. The gripping section 16 at the end of the insertion part 14 is shown. In this case, the gripping section 16 integrates the sealing device 18 in the manner of a radially closed lip extending towards the center of the connecting device 13 in such a manner that, since it is an elastic element, it lets the gas pipe 10 pass during the assembly and presses it once mounted. This pressure also provides it with the sealing function, since the sealing device 18 closes the opening tubular space 8 when it is deformed.

### REFERENCE NUMERALS

- 4: Gas device
- 5: Gas connection
- 6: Opening
- 7: Opening inner surface
- 8: Opening tubular space
- 9: Opening inner stop
- 10: Gas pipe
- 11: Notch
- 12: Pipe outer surface
- 13: Connecting device
- 14: Insertion part
- 15: Meshing section
- 16: Gripping section
- 17: Flange
- 18: Sealing device
- 19: Stop part

## Claims

1. Gas cooking appliance with a gas device (4) and a gas pipe (10) that are connected to one another by means of a connecting arrangement of the gas pipe (10) of the gas appliance to a gas connection (5) of the gas device (4) of the gas cooking appliance, the connecting arrangement of the gas cooking appliance comprising a connecting device (13) to connect the gas pipe (10) to the gas connection (5), wherein the gas connection (5) has an opening (6) with an opening inner surface (7) having a diameter bigger than a diameter of a pipe outer surface (12) of the gas pipe (10), which define an opening tubular space (8) between them, the connecting device (13) has an insertion part (14) inserted in the mounting axial direction of the gas pipe (10) into the opening tubular space (8) with a meshing section (15) fixed at least axially to the opening inner surface (7) and a gripping section (16) in contact with the pipe outer surface (12) of the gas pipe (10), wherein the connecting arrangement also comprises a sealing device (18) mounted in the opening tubular space (8) between the pipe outer surface (12) and the opening inner surface (7), **characterized in that** the sealing device (18) is made in one piece with the connecting device (13).

2. Gas cooking appliance according to claim 1, **characterized in that** the gas connection (5) has an opening inner stop (9) beyond the opening (6) in the direction of insertion of the gas pipe (10) having a diameter smaller than the diameter of the opening inner surface (7).

3. Gas cooking appliance according to any of the preceding claims, **characterized in that** the gripping section (16) presses the pipe outer surface (12) and limits the movement of the gas pipe (10) at least in the axial direction of extraction of the gas pipe (10).

4. Gas cooking appliance according to any of the preceding claims, **characterized in that** the pipe outer surface (12) has at least a notch (11) with which at least a flexible flange (17) of the gripping section (16) meshes and which limits the movement of the gas pipe (10) at least in its extraction axial direction.

5. Gas cooking appliance according to any of the preceding claims, **characterized in that** the connecting device (13) is actuable with a tool to loosen the gas pipe (10).

6. Gas cooking appliance according to any of the preceding claims, **characterized in that** the insertion part (14) and the gripping section (16) of the connecting device (13) are made in one piece of plastic material.

7. Gas cooking appliance according to any of the preceding claims, **characterized in that** the sealing device (18) forms part of the gripping section (16).

8. Gas cooking appliance according to any of the preceding claims, **characterized in that** the connecting device (13) is made of an elastic material such as rubber or silicone.

9. Gas cooking appliance according to any of the preceding claims, **characterized in that** the meshing section (15) is press-fitted into the opening (6).

10. Gas cooking appliance according to any of the preceding claims, **characterized in that** the gas device (4) is a gas tap and/or a gas burner.

## Patentansprüche

1. Gaskochgerät mit einer Gasvorrichtung (4) und einer Gasleitung (10), die mithilfe einer Verbindungsanordnung der Gasleitung (10) des Gasgeräts für einen Gasanschluss (5) der Gasvorrichtung (4) des Gaskochgeräts miteinander verbunden sind, wobei die Verbindungsanordnung des Gaskochgeräts eine Verbindungsvorrichtung (13) zum Verbinden der Gasleitung (10) mit dem Gasanschluss (5) umfasst, wobei der Gasanschluss (5) eine Öffnung (6) mit einer Öffnungsinnenfläche (7) aufweist, deren Durchmesser größer ist als ein Durchmesser einer Leitungsaußenfläche (12) der Gasleitung (10), und die Innen- und die Außenfläche zwischen sich einen rohrförmigen Öffnungsbereich (8) definieren, wobei die Verbindungsvorrichtung (13) einen Einführteil (14) aufweist, der in axialer Installationsrichtung der Gasleitung (10) in den rohrförmigen Öffnungsbereich (8) eingeführt ist, wobei ein eingreifender Teil (15) zumindest axial an der Öffnungsinnenfläche (7) fixiert ist und sich ein Greifabschnitt (16) mit der Leitungsaußenfläche (12) der Gasleitung (10) in Kontakt befindet, wobei die Verbindungsanordnung auch eine Dichtungsvorrichtung (18) umfasst, die in dem rohrförmigen Öffnungsbereich (8) zwischen der Leitungsaußenfläche (12) und der Öffnungsinnenfläche (7) angebracht ist, **dadurch gekennzeichnet, dass** die Dichtungsvorrichtung (18) einstückig mit der Verbindungsvorrichtung (13) hergestellt ist.

2. Gaskochvorrichtung nach Anspruch 1, **dadurch gekennzeichnet, dass** der Gasanschluss (5) einen Öffnungsinnenanschlag (9) aufweist, der in Einführrichtung der Gasleitung (10) hinter der Öffnung (6) liegt und einen geringeren Durchmesser aufweist als die Öffnungsinnenfläche (7).

3. Gaskochgerät nach einem der vorhergehenden Ansprüche, **dadurch gekennzeichnet, dass** der Greifabschnitt (16) auf die Leitungsaußenfläche (12) drückt und die Bewegung der Gasleitung (10) zumindest in ihrer axialen Herausziehrichtung einschränkt.

4. Gaskochgerät nach einem der vorhergehenden Ansprüche, **dadurch gekennzeichnet, dass** die Leitungsaußenfläche (12) zumindest eine Kerbe (11) aufweist, in die zumindest ein flexibler Bund (17) des Greifabschnitts (16) eingreift und die die Bewegung der Gasleitung (10) in zumindest ihrer axialen Herausziehrichtung einschränkt.

5. Gaskochgerät nach einem der vorhergehenden Ansprüche, **dadurch gekennzeichnet, dass** sich die Verbindungsvorrichtung (13) zum Lösen der Gasleitung (10) mit einem Werkzeug betätigen lässt.

6. Gaskochgerät nach einem der vorhergehenden Ansprüche, **dadurch gekennzeichnet, dass** der Einführteil (14) und der Greifabschnitt (16) der Verbindungsvorrichtung (13) einstückig aus einem Kunststoffmaterial hergestellt sind.

7. Gaskochgerät nach einem der vorhergehenden Ansprüche, **dadurch gekennzeichnet, dass** die Dichtungsvorrichtung (18) Bestandteil des Greifabschnitts (16) ist.

8. Gaskochgerät nach einem der vorhergehenden Ansprüche, **dadurch gekennzeichnet, dass** die Verbindungsvorrichtung (13) aus einem elastischen Material wie Kautschuk oder Silikon hergestellt ist.

9. Gaskochgerät nach einem der vorhergehenden Ansprüche, **dadurch gekennzeichnet, dass** der eingreifende Abschnitt (15) in die Öffnung (6) eingepresst ist.

10. Gaskochgerät nach einem der vorhergehenden Ansprüche, **dadurch gekennzeichnet, dass** es sich bei der Gasvorrichtung (4) um einen Gashahn und/oder einen Gasbrenner handelt.

## Revendications

1. Appareil de cuisson à gaz avec un dispositif à gaz (4) et un tuyau de gaz (10) raccordés l'un à l'autre par le biais d'un agencement de raccordement du tuyau de gaz (10) de l'appareil à gaz à un raccord de gaz (5) du dispositif à gaz (4) de l'appareil de cuisson à gaz, l'agencement de raccordement de l'appareil de cuisson à gaz comprenant un dispositif de raccordement (13) afin de raccorder le tuyau de gaz (10) au raccord de gaz (5), dans lequel le raccord de gaz (5) possède une ouverture (6) avec une surface intérieure d'ouverture (7) ayant un diamètre supérieur à un diamètre d'une surface extérieure de tuyau (12) du tuyau de gaz (10), qui définissent un espace tubulaire d'ouverture (8) entre eux, le dispositif de raccordement (13) possède une partie d'insertion (14) insérée dans la direction axiale de montage du tuyau de gaz (10) à l'intérieur de l'espace tubulaire d'ouverture (8) avec une section d'engrènement (15) fixée au moins axialement à la surface intérieure d'ouverture (7) et une section de serrage (16) en contact avec la surface extérieure de tuyau (12) du tuyau de gaz (10), dans lequel l'agencement de raccordement comprend également un dispositif de scellement (18) monté dans l'espace tubulaire d'ouverture (8) entre la surface extérieure de tuyau (12) et la surface intérieure d'ouverture (7), **caractérisé en ce que** le dispositif de scellement (18) est réalisé en une pièce avec le dispositif de raccordement (13).

2. Appareil de cuisson à gaz selon la revendication 1, **caractérisé en ce que** le raccord de gaz (5) possède un arrêt intérieur d'ouverture (9) au-delà de l'ouverture (6) dans la direction d'insertion du tuyau de gaz (10) ayant un diamètre inférieur au diamètre de la surface intérieure d'ouverture (7).

3. Appareil de cuisson à gaz selon l'une quelconque des revendications précédentes, **caractérisé en ce que** la section de serrage (16) comprime la surface extérieure de tuyau (12) et limite le mouvement du tuyau de gaz (10) au moins en direction axiale d'extraction du tuyau de gaz (10).

4. Appareil de cuisson à gaz selon l'une quelconque des revendications précédentes, **caractérisé en ce que** la surface extérieure de tuyau (12) possède au moins une encoche (11) avec laquelle au moins une bride flexible (17) de la section de serrage (16) s'engrène et qui limite le mouvement du tuyau de gaz (10) au moins dans sa direction axiale d'extraction.

5. Appareil de cuisson à gaz selon l'une quelconque des revendications précédentes, **caractérisé en ce que** le dispositif de raccordement (13) est actionnable avec un outil afin de desserrer le tuyau de gaz (10).

6. Appareil de cuisson à gaz selon l'une quelconque des revendications précédentes, **caractérisé en ce que** la partie d'insertion (14) et la section de serrage (16) du dispositif de raccordement (13) sont réalisées en une pièce de matériau plastique.

7. Appareil de cuisson à gaz selon l'une quelconque des revendications précédentes, **caractérisé en ce que** le dispositif de scellement (18) fait partie de la section de serrage (16).

8. Appareil de cuisson à gaz selon l'une quelconque des revendications précédentes, **caractérisé en ce que** le dispositif de raccordement (13) est réalisé en un matériau élastique comme le caoutchouc ou la silicone.

9. Appareil de cuisson à gaz selon l'une quelconque des revendications précédentes, **caractérisé en ce que** la section d'engrènement (15) est montée à la presse dans l'ouverture (6).

10. Appareil de cuisson à gaz selon l'une quelconque des revendications précédentes, **caractérisé en ce que** le dispositif à gaz (4) est un robinet de gaz et/ou un brûleur à gaz.
